# FASCICULE DE BREVET EUROPEEN

(11) **EP 2 135 999 B1**
(45) Date de publication et mention de la délivrance du brevet: **13.01.2016**
(21) Numéro de dépôt: 09163038.4
(22) Date de dépôt: 18.06.2009
(51) Int. Cl.: E01C 21/00

(54) **Procédé pour le recyclage et le traitement de déblais de terrassement et installation pour la mise en oeuvre de ce procédé.**
Verfahren zum Recyceln und zur Aufbereitung von Aushub von Erdarbeiten und Anlage zur Umsetzung dieses Verfahrens
Method for recycling and treating spoil material and installation for implementing this method

(30) Priorité: 18.06.2008 FR 0854040
(43) Date de publication de la demande: 23.12.2009
(73) Titulaire: Rem Innovation, 59670 Noordpeene (FR)
(72) Inventeur: Vitse, Christian, 59285 Rubrouck (FR); Vitse, Jean, 59285 Rubrouck (FR); Vitse, François, 59670 Noordpeene (FR)
(74) Mandataire: Balesta, Pierre

(56) Documents cités:
- WO-A-02/26403
- WO-A-2007/012741
- CH-A5- 692 274
- DE-A1-102005 029 561
- DE-U1-202005 003 569
- FR-A- 2 806 105
- FR-A- 2 899 835

## Description

La présente invention est relative au domaine du recyclage et du traitement des déblais de terrassement, c'est-à-dire des matériaux terreux ou argileux en présence de cailloux. L'invention concerne en particulier un procédé de traitement et de recyclage de déblais de terrassement, permettant d'obtenir une mouture composée d'un mélange de matériaux issus de ces déblais avec au moins un ou plusieurs adjuvants. Elle concerne également une installation spécialement conçue pour la mise en oeuvre du procédé selon l'invention.

Les travaux de terrassement sur sites génèrent des déblais, lesquels peuvent être réutilisés ou stockés sur place, voire évacués et stockés, puis utilisés dans un second temps sur un autre site. Les matériaux issus de ces déblais de terrassement sont en mélange de gravas et présentent des compositions différentes selon le lieu et/ou la profondeur de terrassement. En outre, les matériaux issus des déblais renferment un pourcentage d'humidité variable. De tels matériaux issus des déblais de terrassement nécessitent donc un traitement, notamment dans le but de diminuer le taux d'humidité, cette diminution étant obtenue en ajoutant un adjuvant tel que des pulvérulents ou des liants, de type chaux, bentonite ou liants hydrauliques.

Divers procédés et installations sont connus de l'homme du métier, en particulier des publications EP 1.072.370, EP 1.471.185, FR 2 806 105, FR 2.788.795, US 6.000.641, WO 03/088710 et EP 1.387.009.

De manière générale, les documents cités ci-dessus présentent une première trémie renfermant des matériaux issus des déblais de terrassement, une seconde trémie ou un doseur renfermant de l'adjuvant, et des moyens de malaxage desdits matériaux et de l'adjuvant en vue d'obtenir un mélange constituant au final une mouture issue dudit procédé de traitement.

Selon les documents EP 1.471.185, EP 1.387.009 et US 6.000.641, les matériaux issus des déblais de terrassement sont extraits de la trémie et déposés sur un tapis d'acheminement, en constituant une veine de matériau, l'adjuvant étant extrait de la seconde trémie et déversé sur ladite veine. Les moyens de malaxage sont constitués d'une enceinte renfermant une pluralité de rotors à pales disposés verticalement en quinconce, au dessus desquels est agencé un couteau rotatif disposé à l'extrémité aval du tapis du cheminement, ledit couteau permettant de gratter ou couper la veine du mélange matériau et adjuvant pour projeter ledit mélange entre les rotors à pales afin de brasser celui-ci, lequel est éjecté ensuite par gravité sur un tapis de sortie permettant l'éjection dudit mélange par gravité voire son acheminement via d'autres étapes, notamment une étape supplémentaire de criblage dudit mélange.

Selon le document WO 03/008710, les matériaux issus des déblais de terrassement sont déversés dans un malaxeur, l'adjuvant étant également déversé dans ledit malaxeur, ce malaxeur comprenant une ouverture dans le fond permettant d'extraire par gravité le mélange qui est évacué sur un tapis.

Selon le document FR 2.788.795, l'adjuvant est déposé sur une veine de matériaux issus des déblais de terrassement, lesquels sont évacués sur un tapis, ledit mélange étant ensuite brassé par des moyens de brassage et de retournement en bout de tapis, lesdits moyens étant disposés dans le même plan que ledit tapis.

Selon le document EP 1.072.370, l'adjuvant est déposé au dessus de la veine de matériaux issus des déblais de terrassement de manière similaire aux documents précédents, ledit mélange pénétrant ensuite dans une enceinte munie d'un rotor à pales, ayant un axe transversal, ladite enceinte étant rehaussée par rapport au tapis sur lequel est acheminé le mélange, de manière à laisser apparaître une ouverture en entrée et une ouverture en sortie, le mélange passant sous l'enceinte étant brassé au moyen du rotor à pales avant son extraction par la zone de sortie. Selon une alternative, l'adjuvant est déposé sur la veine mais en avant à l'intérieur de l'enceinte, avant le brassage du mélange.

On connaît également le document DE 10.2005.029561 qui divulgue un procédé de traitement et de recyclage de déblais de terrassement ainsi qu'une installation pour la mise en oeuvre de ce procédé. Selon ce document DE 10.2005.029561, l'installation comprend une enceinte de malaxage montée en rotation selon un axe incliné par rapport à la verticale. Un tapis convoyeur permet d'acheminer des déblais de terrassement au dessus de l'enceinte, ces déblais tombant par gravité à l'intérieur de l'enceinte. Une trémie contenant de l'adjuvant, est équipée d'un doseur pour la quantification de l'adjuvant, lequel est acheminé par un tapis convoyeur au dessus de l'enceinte de malaxage et tombe par gravité à l'intérieur de celle-ci. Un mélangeur est agencé dans l'enceinte et tourne selon un axe incliné parallèle à l'axe de rotation de l'enceinte, lequel permet le mélange des déblais et de l'adjuvant, concomitamment à la rotation de l'enceinte tournant elle-même selon son propre axe incliné. Des pales sont agencées en partie inférieure de l'enceinte, dans le fond de celle-ci, ces pales tournant autour de l'axe incliné de l'enceinte du fait de sa rotation. Ces pales permettent, d'une part, de contribuer au malaxage et, d'autre part, d'expulser le mélange de déblais et d'adjuvant malaxé, par une ouverture située dans le fond de l'enceinte en partie centrale, le mélange tombant par gravité sur un tapis convoyeur.

Le document FR 2 806 105 concerne un dispositif mobile permettant de traiter les matériaux naturels ou les déblais avec un liant en réalisant un mélange intime. Le dispositif est constitué d'une machine de criblage mobile dans laquelle on va introduire les matériaux. Le convoyeur va amener les matériaux dans l'émotteur-malaxeur. Une vis transporte le liant dans l'émotteur-malaxeur qui réalise un mélange intime entre les matériaux et le liant. Le convoyeur va extraire les matériaux sous l'émotteur-malaxeur.

L'objet de la présente invention est de mettre en oeuvre une alternative du procédé de traitement et de recyclage des déblais de terrassement, ainsi qu'une alternative de conception de l'installation pour la mise en oeuvre d'un tel procédé de traitement et de recyclage des déblais.

Cette alternative a pour objet d'améliorer la pulvérisation des matériaux issus des déblais de terrassement ainsi que le mélange de ces matériaux pulvérisé avec l'adjuvant à l'intérieur de l'enceinte de malaxage, ce qui a pour conséquence notable d'éviter un broyage complémentaire du mélange en sortie du malaxeur, tel que cela est prévu notamment dans le document EP 1.471.185, US 6.000.641 et EP 1.387.009, et d'améliorer la qualité de la mouture issue des matériaux recyclés.

En outre, l'invention constitue une alternative de conception d'une installation pour le traitement et le recyclage de déblais de terrassement qui, vis-à-vis de l'installation mise en oeuvre dans le document DE 10.2005.029561, a pour objet de simplifier celle-ci et ainsi de réduire son coût de fabrication.

Selon 11Invention, le procédé de traitement et de recyclage des déblais de terrassement permet d'obtenir une mouture composée d'un mélange de matériaux issus desdits déblais avec au moins un adjuvant. Ce procédé comprend au moins les étapes consistant à :
- extraire régulièrement d'une trémie un volume de matériaux scalpés, de manière à former une veine de matériaux, cette veine étant acheminée dans un sens vers une enceinte de traitement disposée en aval de la trémie ;
- introduire progressivement par gravité cette veine de matériaux dans l'enceinte ;
- ajouter aux matériaux situé dans l'enceinte, un adjuvant, lequel est également introduit progressivement par gravité dans l'enceinte ;
- pulvériser les matériaux et les malaxer avec l'adjuvant, au moyen d'un rotor à pales ou pics ayant un axe de rotation perpendiculaire au sens d'acheminement de la veine de matériaux de la trémie vers l'enceinte, correspondant notamment au sens longitudinal de l'installation, ainsi qu'au sens d'introduction par gravité de la veine de matériaux dans l'enceinte. La pulvérisation et le malaxage se font en maintenant en permanence dans l'enceinte un niveau de remplissage en matériaux dans lequel baigne en partie ledit rotor à pales ou pics, le sens de rotation du rotor à pales, notamment le sens trigonométrique lorsque les matériaux se déplacent longitudinalement de la gauche vers la droite, étant configuré pour emporter et projeter sur une paroi interne de l'enceinte, dans un sens opposé à celui de l'acheminement, la veine de matériaux tombant dans ladite enceinte, les matériaux pulvérisés avec l'adjuvant étant alors brassés plusieurs fois, du fait notamment du maintien d'un niveau de remplissage permanent dans l'enceinte, lesquels étant de nouveau projetés sur la paroi interne de l'enceinte, ce qui affine la pulvérisation et le malaxage. Le mélange est progressivement évacué au travers d'une ouverture en partie inférieure aval de l'enceinte, la rotation du rotor permettant l'évacuation du mélange au travers de ladite ouverture.

Un tel procédé permet d'assurer la pulvérisation des matériaux issus des déblais, lesquels sont emportés par le rotor à pales ou pics et projetés sur la paroi dans l'enceinte, ce qui les pulvérise ; les matériaux pulvérisés avec l'adjuvant sont alors brassés plusieurs fois, du fait notamment du maintien d'un niveau de remplissage permanent dans l'enceinte, lesquels étant de nouveau projetés sur la paroi interne de l'enceinte, ce qui affine la pulvérisation et le malaxage.

Par ailleurs, cette conception a pour avantage d'évacuer seule la mouture par l'ouverture en partie inférieure avale de l'enceinte. En effet, tant que le mélange, matériaux et adjuvent, n'est pas suffisamment pulvérisé, celui-ci demeure dans l'enceinte, seule la mouture étant capable d'être chassée par l'ouverture sous l'effet de la poussée exercée par la rotation du rotor à pales, pouvant sortir de l'enceinte.

En outre, cette conception a pour effet de concomitamment malaxer les matériaux et l'adjuvant et d'évacuer le mélange obtenu, les opérations étant réalisées au moyen d'un seul et même rotor à pales, contrairement au procédé et à l'installation mise en oeuvre selon DE 10.2005.029561 qui nécessite une enceinte montée en rotation selon un axe incliné et un malaxeur disposé à l'intérieur de cette enceinte.

Selon l'invention, préalablement à ces étapes, le procédé comprend une étape consistant à scalper les matériaux issus des déblais de terrassement et à extraire les morceaux granulaires de grosse importance, lesdits matériaux scalpés étant stockés dans la trémie. Cela permet d'obtenir un premier affinage desdits matériaux.

De même, suite à ces étapes, le procédé comprend une étape supplémentaire consistant à cribler le mélange, pour séparer les petits morceaux granulaires demeurant dans ledit mélange de la mouture fine. Une étape complémentaire consiste à évacuer séparément les petits morceaux granulaires et la mouture fine du mélange. Cela permet d'affiner la mouture et de recycler séparément les deux produits obtenus en fin de traitement.

Un autre aspect de l'invention porte sur l'installation pour la mise en oeuvre du procédé selon l'invention. Cette installation comporte au moins une première trémie contenant des matériaux issus des déblais de terrassement et une seconde trémie contenant de l'adjuvant. Elle comporte également une enceinte à l'intérieur de laquelle est disposé un rotor à pales ayant un axe de rotation perpendiculaire au sens d'acheminement desdits matériaux sur ladite installation de la première trémie vers l'enceinte ainsi qu'au sens d'introduction par gravité desdits matériaux dans l'enceinte, de même qu'un tapis pour l'acheminement vers l'enceinte des matériaux issus des déblais et extraits de la première trémie. De manière remarquable, l'enceinte consiste en une cuve ouverte en partie supérieure et munie d'une ouverture en partie inférieure aval, l'extrémité aval du tapis et la seconde trémie étant disposées au-dessus de la cuve. Le rotor à pales tourne à contresens par rapport au sens d'acheminement des matériaux au dessus de l'enceinte, les matériaux tombant par gravité dans celle-ci. De même, l'adjuvant tombe à l'intérieur de cette enceinte. Le sens de rotation du rotor à pales est configuré pour, d'une part, emporter et projeter sur une paroi interne de la cuve, dans un sens opposé à celui de l'acheminement, lesdits matériaux tombant dans ladite enceinte et pour brasser plusieurs fois lesdits matériaux pulvérisés avec l'adjuvant, du fait notamment du maintien d'un niveau de remplissage permanent dans l'enceinte, lesquels étant de nouveau projetés sur la paroi interne de l'enceinte, ce qui affine la pulvérisation et le malaxage, et, d'autre part, évacuer progressivement le mélange au travers de l'ouverture en partie inférieure aval de l'enceinte. En outre, elle comprend un système de gestion des deux trémies, du tapis et du rotor à pales, ce système de gestion étant agencé pour maintenir en permanence une quantité de matériaux à l'intérieur de la cuve durant la pulvérisation dudit matériau et le malaxage de celui-ci avec l'adjuvant.

Ce système de gestion comprend, d'une part, des moyens de mesure du moment exercé sur le rotor à pales ou pics, ledit moment étant représentatif de la quantité de matériaux dans la cuve, et d'autre part, des moyens de régulations en fonction de la mesure du moment, de la vitesse du tapis, de la vitesse de rotation du rotor à pales, du débit de matériaux issus des déblais et extrait de la première trémie et du débit d'adjuvant extrait de la seconde trémie.

De manière préférentielle, l'installation comprend un scalpeur qui est disposé directement au-dessus de la première trémie ou grille ; celui-ci permet de scalper les matériaux issus des déblais de terrassement préalablement à leur introduction dans cette trémie, et d'extraire les morceaux granulaires de grosse taille. On réalise ainsi un premier affinage du matériau en amont sur l'installation.

Par ailleurs, l'installation comprend un tapis intermédiaire dont au moins l'extrémité amont est disposée sous l'ouverture en partie inférieure aval de la cuve, ledit tapis étant agencé pour acheminer le mélange en direction d'une sortie sur l'installation. Préalablement à l'évacuation du produit recyclé, l'installation prévoit d'autres étapes intermédiaires permettant d'affiner la mouture ; pour cela, elle comprend également un cribleur qui est agencé au moins sous l'extrémité aval du tapis intermédiaire, ce cribleur permettant d'extraire les petits morceaux granulaires dans la mouture fine du mélange. Cela présente en outre pour avantage d'obtenir deux produits finaux, d'une part des petits morceaux granulaires, et d'autre part une mouture fine, lesquels peuvent être recyclés séparément.

A ce titre, l'installation comprend également un premier tapis d'éjection des petits morceaux granulaires et un second tapis d'éjection de la mouture fine, le cribleur étant disposé au-dessus du second tapis d'éjection, l'une des extrémités dudit cribleur étant disposé au-dessus de l'extrémité amont du premier tapis d'éjection. Ainsi, on évacue séparément les petits morceaux granulaires et la mouture fine.

Par ailleurs, le tapis intermédiaire, le cribleur et le second tapis d'éjection sont inclinés vers le haut, et son disposés sensiblement parallèlement les uns par rapport aux autres, l'extrémité amont du cribleur étant au-dessus de l'extrémité amont du premier tapis d'éjection, lequel est disposé latéralement par rapport au tapis intermédiaire et au second tapis d'éjection. Une telle conception a notamment pour avantage d'améliorer la compacité de l'installation par rapport aux installations antérieures.

De manière préférentielle, la cuve comprend un système de réglage des dimensions de l'ouverture en partie inférieure aval. Cela permet de modifier le débit du mélange évacué hors de l'enceinte, notamment pour réguler le niveau de matière à l'intérieur de l'enceinte.

Par ailleurs, la cuve comprend un fond muni de moyens d'inclinaison ou des moyens d'escamotage. Ces moyens ont pour fonction de permettre le dégagement du fond en vue d'extraire la totalité du mélange demeurant dans la cuve en fin de journée, lors de l'arrêt de l'installation, ce qui évite que les matériaux ne durcissent dans ladite cuve.

La présente invention sera mieux comprise à la lecture de la description qui va suivre d'un mode préférentiel de réalisation de l'installation et du procédé de traitement et recyclage des déblais, cette description s'appuyant sur des figures parmi lesquelles :
- la figure 1 schématise un mode préférentiel de mise en oeuvre de l'installation et
- la figure 2 schématise un mode préférentiel de mise en oeuvre du rotor à pales.

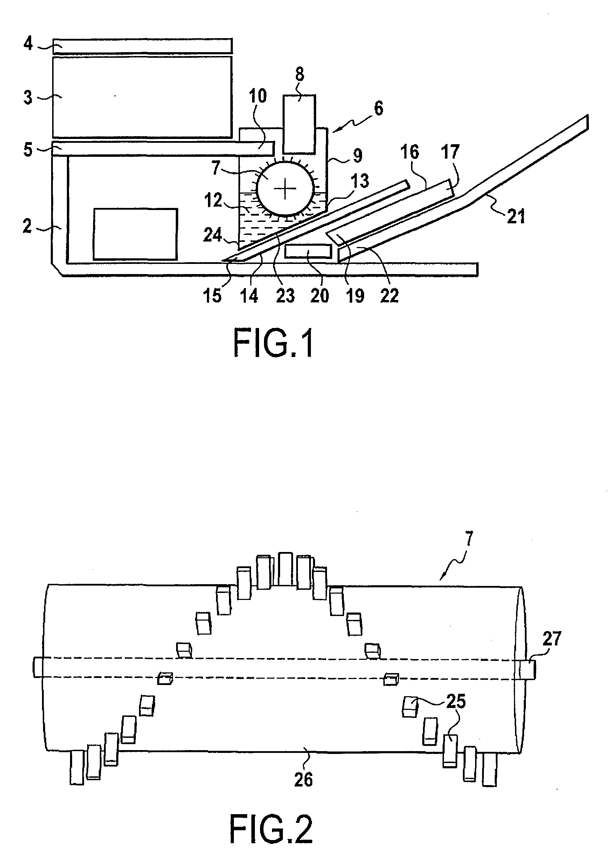

L'installation pour la mise en oeuvre du procédé de traitement et de recyclage des déblais de terrassement, telle qu'illustrée à la figure 1, peut constituer une machine fixe sur un site de traitement et de recyclage des déblais de terrassement, voire un engin mobile pouvant être déplacé directement sur les sites ou chantiers sur lesquels sont réalisés les travaux de terrassement. Cette installation 1 comprend un châssis 2 agencé pour recevoir les différents éléments qui la composent. A ce titre, l'installation comprend ensuite une première trémie 3, agencée pour recevoir les matériaux issus des déblais de terrassement. Au dessus de cette trémie 3, est agencé un scalpeur 4, lequel permet de scalper les matériaux issus des déblais de terrassement et d'extraire les morceaux granulaires de grosse importance se trouvant dans lesdits matériaux, ces matériaux étant ensuite stockés dans la trémie. Ce scalpeur 4 permet donc de réaliser un premier affinage des matériaux issus des déblais de terrassement.

Sous cette première trémie 3, est agencé un tapis 5 pour l'acheminement des matériaux vers une enceinte 6 de pulvérisation desdits matériaux et de malaxage de ceux-ci avec un adjuvant. Pour cela, la trémie 3 dispose en sa partie inférieure d'un système d'évacuation des matériaux qu'elle contient, tel que par exemple un cribleur, un doseur ou tout autre moyen d'évacuation sur le tapis d'acheminement 5.

L'enceinte 6 renferme un rotor à pales 7, lequel permet, d'une part, la pulvérisation des matériaux acheminés dans ladite enceinte par le tapis d'acheminement 5 et, d'autre part, le malaxage de ce matériau avec l'adjuvant, lequel permet de diminuer le taux d'humidité des matériaux. Cet adjuvant est contenu dans une seconde trémie 8, laquelle est agencée pour déverser directement l'adjuvant à l'intérieur de l'enceinte 6.

On peut envisager une trémie ou une pluralité de trémies contenant des adjuvants de composition différente, disposées les unes à côté des autres, ce qui présente comme avantage de choisir l'adjuvant en fonction du taux d'humidité dans les matériaux de déblai, voire de l'utilisation que l'on souhaite en faire une fois le recyclage effectué. Par exemple, on choisit un adjuvant du type chaux ou tout autre pulvérulent.

L'enceinte 6 se présente sous la forme d'une cuve 9 qui est ouverte en partie supérieure pour permettre l'introduction en partie supérieure à l'intérieur de ladite cuve de l'adjuvant, ainsi que des matériaux acheminés par le tapis 5. On entend par ouverte en partie supérieure le fait que la cuve comprend au moins des orifices de passage de l'extrémité aval 10 du tapis d'acheminement 5 et du système d'éjection, par exemple un doseur, agencé sur la seconde trémie 8 pour l'extraction de l'adjuvant.

De manière préférentielle, l'extrémité aval 10 est agencée pour être positionnée a proximité d'un plan vertical passant par l'axe de rotation du rotor 7, en amont de celui-ci, tandis que le système d'éjection, ou doseur, sur la seconde trémie 8 est agencé pour être disposée légèrement en aval dudit plan vertical passant par l'axe de rotation du rotor 7. A ce titre, le rotor 7 est agencé transversalement dans l'enceinte 6 et présente par conséquent, un axe de rotation transversal. En outre, le rotor est agencé pour tourner dans le sens inverse au sens d'acheminement des matériaux depuis le tapis 5. Tel que schématisé sur la figure 1, le sens de rotation du rotor est donc le sens trigonométrique. Ainsi, un tel agencement de l'extrémité aval 10 du tapis d'acheminement 5 et de la seconde trémie 8 combiné avec le sens de rotation du rotor 7, assure que les matériaux se déplaçant sur le tapis 5 sous la forme d'une veine de matériaux, soit introduit à l'intérieur de l'enceinte et tombe par gravité sur le rotor à pales ou pics, lequel projette ledit matériau sur la paroi interne de la cuve de manière à pulvériser celui-ci. En outre, la cuve 9 a pour fonction de maintenir un niveau de remplissage en matériaux en permanence de manière à ce que le rotor à pales ou pics baigne dans lesdits matériaux 12 disposés dans ladite cuve 9, lesquels sont brassés par le rotor à pales 7 ou pics. En outre, l'adjuvant tombe également par gravité dans l'enceinte et est également entraîné par le rotor à pales 7 ou pics et se dépose donc sur les matériaux préalablement pulvérisés pour être ensuite malaxé avec ceux-ci au cours du brassage, le mélange demeurant un laps de temps dans l'enceinte, jusqu'à ce que la mouture puisse être évacuée de celle-ci.

Pour cela, la cuve 9 dispose en sa partie inférieure aval 13, c'est-à-dire sur la partie inférieure de la paroi disposée en aval de l'enceinte 6, d'une ouverture permettant d'évacuer progressivement le mélange du matériau pulvérisé avec l'adjuvant. L'évacuation dudit mélange est générée par le rotor à pales 7 et son sens de rotation qui tend à chasser le mélange vers l'avant et donc à évacuer celui-ci au travers de l'ouverture, ledit mélange tombant ensuite par gravité hors de l'enceinte 6.

En outre, l'ouverture est dimensionnée de manière à conserver les matériaux tant qu'ils ne sont pas suffisamment pulvérisés, ceux-ci continuant d'être brassés. Seule la mouture est donc capable de sortir de ladite ouverture.

L'installation comprend un second tapis intermédiaire 14 permettant d'acheminer le mélange évacué de l'enceinte 6, en direction de la sortie sur l'installation. De manière préférentielle, ce tapis 14 est disposé en dessous de l'enceinte 6, ce qui garantie que au moins son extrémité amont 15 soit disposée sous l'ouverture en partie inférieure aval de la cuve 9.

Avant d'évacuer le mélange en sortie de l'installation, celui-ci subit un second traitement afin de séparer les petits morceaux granulaires demeurant dans ledit mélange par rapport à la mouture fine. Pour cela, l'installation comprend un cribleur 16 permettant de cribler ledit mélange pour réaliser une séparation entre les petits morceaux granulaires et la mouture fine contenue dans le mélange. Ce cribleur 16 est disposé sous le tapis intermédiaire 14 en sorte que l'extrémité aval 17 du tapis intermédiaire 14 soit disposée au dessus dudit cribleur 16, légèrement en retrait par rapport à l'extrémité aval 18 de celui-ci. Par ailleurs, le tapis intermédiaire 14 et le cribleur 16 sont disposés de préférence dans une position inclinée vers le haut, tel que schématisé sur la figure 1, ce qui permet à la mouture fine d'être filtrée et évacuée sous le cribleur, tandis que les petits morceaux granulaires descendent par gravité vers l'extrémité amont 19 dudit cribleur 16 pour être évacués par ladite extrémité amont 19. Pour cela, l'installation comprend également deux tapis d'éjection 20,21, le premier tapis d'éjection 20 permettant d'évacuer vers une première sortie, les petits morceaux granulaires tombant de l'extrémité amont 19 du cribleur 16, tandis que le second tapis d'éjection 21 permet d'évacuer vers une seconde sortie, la mouture fine. De préférence, le premier tapis d'éjection 20 est disposé transversalement de manière à évacuer les petits morceaux granulaires hors de l'installation sur l'un de ces cotés latéraux. Par ailleurs, le second tapis d'éjection 21 est également incliné en sorte que le tapis intermédiaire 14, le cribleur et le second tapis d'éjection 21 soient sensiblement parallèles les uns par rapport aux autres, ledit second tapis étant disposé dans le sens de la longueur en sorte d'évacuer la mouture fine vers l'avant de l'installation. Ce second tapis d'éjection est disposé en sorte que l'extrémité amont 19 du cribleur soit disposée au dessus de l'extrémité amont 22 du second tapis d'éjection, pour récupérer convenablement la mouture fine sur ledit second tapis. Cette extrémité amont 19 du cribleur 16 est en outre également disposée au dessus de l'extrémité amont du premier tapis d'éjection 20, pour l'évacuation convenable des petits morceaux granulaires sur ledit premier tapis.

Ainsi, les petits morceaux granulaires et la mouture fine contenus dans le mélange sont évacués séparément, ce qui facilite leur réutilisation ultérieure. Par ailleurs, cette disposition permet de limiter l'encombrement de l'installation.

De manière remarquable, l'installation 1 comprend un système de gestion de la trémie 3 contenant les matériaux issus des déblais de terrassement et de la trémie 8 contenant l'adjuvant. Ce système de gestion permet également la gestion de la vitesse du tapis d'acheminement 5, de la vitesse de rotation du rotor à pales 7, ainsi que, de préférence, de la vitesse d'avance du tapis intermédiaire 14 et des deux tapis d'éjection 20,21. Ce système de gestion permet donc de maintenir en permanence une quantité de matériaux à l'intérieur de la cuve 9 durant le fonctionnement de l'installation. Ce système de gestion comprend des moyens pour estimer la quantité de matières présentes à l'intérieur de la cuve 9. Cette évaluation de la quantité de matériaux est de préférence réalisée en estimant l'effort exercé sur le rotor à pales 7 durant le brassage des matériaux contenus dans la cuve. Pour cela, le système de gestion comprend des moyens de mesure, notamment un dynamomètre, permettant de déterminer le moment exercé sur l'axe du rotor à pales 7. Cette mesure est traitée par des moyens de régulation qui intègre un calculateur, lesdits moyens de régulation régulant alors la vitesse du tapis d'acheminement 5 et le débit de matériau contenu dans la première trémie 3 pour augmenter ou réduire le débit de matériaux introduit par gravité à l'intérieur de l'enceinte 6. De même, ces moyens de régulation agissent sur la seconde trémie 8 pour augmenter ou diminuer le débit d'adjuvant introduit par gravité dans l'enceinte 6. Ces moyens de régulation agissent également sur la vitesse de rotation du rotor à pales 7 ou pics afin d'accélérer le brassage et de chasser plus ou moins vite le mélange hors de l'enceinte.

On pourra également prévoir des moyens de réglage des dimensions de l'ouverture en partie inférieure aval de la cuve, comme par exemple une trappe montée sur glissière permettant de diminuer ou de réduire la section de l'ouverture par un simple coulissement de ladite trappe. Il est également possible de prévoir des moyens de commande de cette trappe permettant au système de gestion d'agir également sur celle-ci afin d'augmenter ou de diminuer l'ouverture pour évacuer plus ou moins vite le mélange.

En outre, la cuve 9 dispose d'un fond 23, lequel est muni de moyens d'inclinaison ou de moyens d'escamotage permettant le dégagement dudit fond pour extraire la totalité du mélange contenu dans la cuve préalablement à l'arrêt de l'installation. On peut par exemple prévoir un fond constitué d'une plaque montée sur pivot à l'extrémité inférieure avant 24 de la cuve 9.

De manière préférentielle et non limitative, les pales 25 du rotor à pales 7 ou pics sont disposées en V, ledit rotor comprenant par exemple une série de quatre V identiques à celui schématisé sur la figure 2 agencée autour d'un tambour 26 muni d'un arbre 27 définissant son axe de rotation. La conception d'un tel rotor est décrite plus en détail dans le brevet EP 1.072.370 B1 de la demanderesse.

## Revendications

1. Procédé de traitement et de recyclage de déblais de terrassement, permettant d'obtenir une mouture composée d'un mélange de matériaux issus desdits déblais avec au moins un adjuvant, et comprenant au moins les étapes consistant à :
- extraire régulièrement d'une trémie (3) un volume de matériaux, de manière à former une veine de matériaux, cette veine étant acheminée dans un sens vers une enceinte (6) de traitement disposée en aval de la trémie (3) ;
- introduire progressivement par gravité cette veine de matériaux dans l'enceinte (6) ;
- ajouter aux matériaux situé dans l'enceinte (6), un adjuvant, lequel est également introduit progressivement par gravité dans l'enceinte (6) ;
- pulvériser les matériaux et les malaxer avec l'adjuvant, au moyen d'un rotor à pales (7) ayant un axe de rotation perpendiculaire au sens d'acheminement de la veine de matériaux de la trémie vers l'enceinte ainsi qu'au sens d'introduction par gravité de la veine de matériaux dans l'enceinte,
**caractérisé en ce que**
- la pulvérisation et le malaxage se font en maintenant en permanence dans l'enceinte (6) un niveau de remplissage en matériaux (12) dans lequel baigne en partie ledit rotor à pales, le sens de rotation du rotor à pales étant configuré pour emporter et projeter sur une paroi interne de l'enceinte, dans un sens opposé à celui de l'acheminement, la veine de matériaux tombant dans ladite enceinte, les matériaux pulvérisés avec l'adjuvant étant alors brassés plusieurs fois, du fait notamment du maintien d'un niveau de remplissage permanent dans l'enceinte, lesquels étant de nouveau projetés sur la paroi interne de l'enceinte, ce qui affine la pulvérisation et le malaxage
- le mélange est évacué progressivement au travers d'une ouverture en partie inférieure aval (13) de l'enceinte (6), la rotation du rotor permettant l'évacuation du mélange au travers de ladite ouverture.

2. Procédé selon la revendication 1, **caractérisé en ce qu'**il comprend une étape préalable consistant à scalper les matériaux issus des déblais de terrassement et à extraire les morceaux granulaires de grosse importance, lesdits matériaux scalpés étant stockés dans la trémie (3).

3. Procédé selon l'une des revendications 1 ou 2, **caractérisé en ce qu'**il comprend une étape suivante consistant à cribler le mélange, pour séparer les petits morceaux granulaires demeurant dans ledit mélange de la mouture fine.

4. Procédé selon la revendication 3, **caractérisé en ce qu'**il comprend une étape suivante consistant à évacuer séparément les petits morceaux granulaires et la mouture fine du mélange.

5. Installation (1) pour la mise en oeuvre du procédé conforme à l'une des revendications 1 à 4, comprenant au moins une première trémie (3) contenant des matériaux issus des déblais de terrassement, une seconde trémie (8) contenant de l'adjuvant, une enceinte (6) à l'intérieur de laquelle est disposé un rotor à pales (7), et un tapis (5) pour l'acheminement desdits matériaux de la première trémie (3) vers l'enceinte (6), le rotor à pales ayant un axe de rotation perpendiculaire au sens d'acheminement desdits matériaux de la première trémie vers l'enceinte ainsi qu'au sens d'introduction par gravité desdits matériaux dans l'enceinte, et l'enceinte (6) consistant en une cuve (9) ouverte en partie supérieure et munie d'une ouverture en partie inférieure aval (13), l'extrémité aval (10) dudit tapis (5) et la seconde trémie (8) étant disposées au-dessus de la cuve (9),
**caractérisée en ce qu'**
elle comprend un système de gestion des deux trémies (3, 8), du tapis et du rotor (7), agencé pour maintenir en permanence un niveau de remplissage en matériaux (12) à l'intérieur de la cuve (9) durant la pulvérisation et le malaxage, le sens de rotation du rotor à pales étant configuré pour, d'une part, emporter et projeter sur une paroi interne de la cuve, dans un sens opposé à celui de l'acheminement, lesdits matériaux tombant dans ladite enceinte et pour brasser plusieurs fois lesdits matériaux pulvérisés avec l'adjuvant, du fait notamment du maintien d'un niveau de remplissage permanent dans l'enceinte, lesquels étant de nouveau projetés sur la paroi interne de l'enceinte, ce qui affine la pulvérisation et le malaxage, et, d'autre part, évacuer progressivement le mélange au travers de l'ouverture.

6. Installation (1) selon la revendication 5, **caractérisée en ce que** le système de gestion comprend, d'une part, des moyens de mesure du moment exercé sur le rotor (7), ledit moment étant représentatif de la quantité de matériaux dans la cuve (9), et d'autre part, des moyens de régulations en fonction de la mesure du moment, de la vitesse du tapis (5), de la vitesse de rotation du rotor (7), du débit de matériaux issus des déblais et du débit d'adjuvant extraits des trémies (3, 8) correspondantes.

7. Installation (1) selon l'une des revendications 5 ou 6, **caractérisée en ce qu'**elle comprend un scalpeur (4) disposé au dessus de la première trémie (3) pour scalper les matériaux issus des déblais avant leur introduction dans ladite trémie (3), et pour extraire les morceaux granulaire de grosse importance.

8. Installation (1) selon l'une des revendications 5 à 7, **caractérisée en ce qu'**elle comprend un tapis intermédiaire (14) dont au moins l'extrémité amont (15) est disposée sous l'ouverture en partie inférieure aval (13) de la cuve (9), ledit tapis (14) étant agencé pour acheminer le mélange vers au moins une sortie sur l'installation (1).

9. Installation (1) selon la revendication 8, **caractérisée en ce que** un cribleur (16) est agencé au moins sous l'extrémité aval (17) du tapis intermédiaire (14), ce cribleur (16) permettant d'extraire les petits morceaux granulaires de la mouture fine du mélange.

10. Installation (1) selon la revendication 9, **caractérisée en ce qu'**elle comprend un premier tapis d'éjection (20) des petits morceaux granulaires et un second tapis d'éjection (21) de la mouture fine, le cribleur (16) étant disposé au-dessus du second tapis d'éjection (21), l'une (19) des extrémités dudit cribleur (16) étant disposé au-dessus de l'extrémité amont du premier tapis d'éjection (20).

11. Installation (1) selon la revendication 10, **caractérisée en ce qu'**au moins le tapis intermédiaire (14), le cribleur (16) et le second tapis d'éjection (21) sont inclinés vers le haut, sensiblement parallèlement les uns par rapport aux autres, l'extrémité amont (19) du cribleur (16) étant au-dessus de l'extrémité amont du premier tapis d'éjection (20), ce dernier étant disposé latéralement.

12. Installation (1) selon l'une des revendications 5 à 11, **caractérisée en ce que** la cuve (9) comprend un système de réglage de dimension de l'ouverture en partie inférieure aval (13).

13. Installation (1) selon l'une des revendications 5 à 12, **caractérisée en ce que** la cuve (9) comprend un fond (23) muni de moyens d'inclinaison ou des moyens d'escamotage agencés pour dégager ledit fond (23) et permettre l'extraction du mélange contenu dans ladite cuve (9).

## Patentansprüche

1. Verfahren zur Behandlung und Rezyklierung von Bodenaushub, das es ermöglicht, ein Mahlgut zu erhalten, das aus einer Mischung von Materialien aus dem Bodenaushub mit mindestens einem Zusatzstoff besteht, und umfassend mindestens die folgenden Schritte, darin bestehend:
- regelmäßig aus einem Trichter (3) ein Materialvolumen zu entnehmen, um einen Materialstrom zu bilden, wobei dieser Strom in eine Richtung zu einem Behandlungsbehälter (6) stromabwärts zum Trichter (3) befördert wird,
- nach und nach durch Schwerkraft diesen Materialstrom in den Behälter (6) einzuführen,
- zu den in dem Behälter (6) befindlichen Materialien einen Zusatzstoff hinzuzufügen, der auch nach und nach durch Schwerkraft in den Behälter (6) eingeführt wird,
- die Materialien zu zerstäuben und sie mit dem Zusatzstoff mit Hilfe eines Rotors mit Schaufeln (7) mit einer Drehachse senkrecht auf die Förderrichtung des Materialstroms vom Trichter zum Behälter sowie auf die Einführungsrichtung des Materialstroms durch Schwerkraft zu mischen,
**dadurch gekennzeichnet, dass**
- das Zerstäuben und Mischen durchgeführt wird, wobei ständig in dem Behälter (6) ein Materialfüllstand (12) aufrechterhalten wird, in den der Rotor mit Schaufeln teilweise eintaucht, wobei die Drehrichtung des Rotors mit Schaufeln derart vorgesehen ist, dass sie den in den Behälter fallenden Materialstrom mitnimmt und an eine Innenwand des Behälters in eine zu jener der Beförderung entgegengesetzte Richtung wirft, wobei die zerstäubten Materialien mit dem Zusatzstoff nun insbesondere auf Grund der Aufrechterhaltung eines ständigen Füllstandes in dem Behälter mehrmals umgewälzt werden, wobei diese neuerlich an die Innenwand des Behälters geworfen werden, wodurch das Zerstäuben und Mischen verfeinert werden,
- die Mischung nach und nach durch eine Öffnung im stromabwärtigen unteren Teil (13) des Behälters (6) abgeleitet wird, wobei die Drehung des Rotors die Ableitung der Mischung durch die Öffnung ermöglicht.

2. Verfahren nach Anspruch 1, **dadurch gekennzeichnet, dass** es einen vorherigen Schritt umfasst, darin bestehend die aus dem Bodenaushub stammenden Materialien in Stücke zu zerkleinern und daraus die großen Granulatstücke zu entnehmen, wobei die zerkleinerten Materialien in dem Trichter (3) gespeichert werden.

3. Verfahren nach einem der Ansprüche 1 oder 2, **dadurch gekennzeichnet, dass** es einen anschließenden Schritt umfasst, darin bestehend, die Mischung zu sieben, um die kleinen Granulatstücke abzutrennen, die in der Mischung des Feinmahlguts bleiben.

4. Verfahren nach Anspruch 3, **dadurch gekennzeichnet, dass** es einen anschließenden Schritt umfasst, darin bestehend, die kleinen Granulatstücke und das Feinmahlgut der Mischung getrennt abzuleiten.

5. Anlage (1) für den Einsatz des Verfahrens nach einem der Ansprüche 1 bis 4, mindestens umfassend einen ersten Trichter (3), der aus dem Bodenaushub stammende Materialien enthält, einen zweiten Trichter (8), der einen Zusatzstoff enthält, einen Behälter (6), im dem ein Rotor mit Schaufeln (7) angeordnet ist, und ein Förderband (5) für die Beförderung der Materialien vom ersten Trichter (3) zum Behälter (6), wobei der Rotor mit Schaufeln eine Drehachse senkrecht auf die Förderachse der Materialien vom ersten Trichter zum Behälter sowie zur Einführungsrichtung der Materialien in den Behälter durch Schwerkraft aufweist, und wobei der Behälter (6) in einer im oberen Teil offenen Wanne (9) besteht, die mit einer Öffnung im unteren stromabwärtigen Teil (13) versehen ist, wobei das stromabwärtige Ende (10) des Förderbandes (5) und der zweite Trichter (8) über der Wanne (9) angeordnet sind, **dadurch gekennzeichnet, dass** sie ein System zur Steuerung der beiden Trichter (3, 8) des Förderbandes und des Rotors (7) umfasst, das derart vorgesehen ist, dass es ständig einen Materialfüllstand (12) im Inneren der Wanne (9) während des Zerstäubens und Mischen aufrecht erhält, wobei die Drehrichtung des Rotors mit Schaufeln derart vorgesehen ist, dass sie einerseits die in den Behälter fallenden Materialien mitnimmt und an eine Innenwand des Behälters in eine zu jener der Beförderung entgegengesetzte Richtung wirft, um die zerstäubten Materialien mit dem Zusatzstoff insbesondere auf Grund der Aufrechterhaltung eines ständigen Füllstandes in dem Behälter mehrmals umzuwälzen, wobei diese neuerlich an die Innenwand des Behälters geworfen werden, wodurch das Zerstäuben und Mischen verfeinert werden, und dass sie andererseits nach und nach die Mischung durch die Öffnung ableitet.

6. Anlage (1) nach Anspruch 5, **dadurch gekennzeichnet, dass** das Steuersystem einerseits Mittel zum Messen des auf den Rotor (7) ausgeübten Moments umfasst, wobei das Moment für die Materialmenge in der Wanne (9) repräsentativ ist, und andererseits Mittel umfasst, um in Abhängigkeit von der Messung des Moments die Geschwindigkeit des Förderbandes (5), die Drehgeschwindigkeit des Rotors (7), die Materialmenge aus dem Aushub und die Menge an Zusatzstoff, die aus den entsprechenden Trichtern (3, 8) entnommen wurden, zu regeln.

7. Anlage (1) nach einem der Ansprüche 5 oder 6, **dadurch gekennzeichnet, dass** sie einen Zerkleinerer (4) umfasst, der über dem ersten Trichter (3) angeordnet ist, um die Materialien aus dem Aushub vor ihrer Einführung in den Trichter (3) in Stücke zu zerkleinern und die großen Granulatstücke zu entnehmen.

8. Anlage (1) nach einem der Ansprüche 5 bis 7, **dadurch gekennzeichnet, dass** sie ein Zwischenförderband (14) umfasst, dessen stromaufwärtiges Ende (15) zumindest unter der Öffnung im unteren stromabwärtigen Teil (13) der Wanne (9) angeordnet ist, wobei das Förderband (14) derart angeordnet ist, dass es die Mischung zu mindestens einem Ausgang an der Anlage (1) befördert.

9. Anlage (1) nach Anspruch 8, **dadurch gekennzeichnet, dass** ein Sieb (16) zumindest unter dem stromabwärtigen Ende (17) des Zwischenförderbandes (14) angeordnet ist, wobei es dieses Sieb (16) ermöglicht, die kleinen Granulatstücke aus dem Feinmahlgut der Mischung zu entnehmen.

10. Anlage (1) nach Anspruch 9, **dadurch gekennzeichnet, dass** sie ein erstes Förderband (20) zum Auswerfen der kleinen Granulatstücke und ein zweites Förderband (21) zum Auswerfen des feinen Mahlguts umfasst, wobei das Sieb (16) über dem zweiten Auswurfförderband (21) angeordnet ist, wobei eines (19) der Enden des Siebs (16) über dem stromaufwärtigen Ende des ersten Auswurfförderbandes (20) angeordnet ist.

11. Anlage (1) nach Anspruch 10, **dadurch gekennzeichnet, dass** zumindest das Zwischenförderband (14), das Sieb (16) und das zweite Auswurfförderband (21) nach oben geneigt sind, im Wesentlichen parallel zueinander, wobei das stromaufwärtige Ende (19) des Siebs (16) über dem stromaufwärtigen Ende des ersten Auswurfförderbandes (20) ist, wobei dieses letztgenannte seitlich angeordnet ist.

12. Anlage (1) nach einem der Ansprüche 5 bis 11, **dadurch gekennzeichnet, dass** die Wanne (9) ein System zur Einstellung der Dimension der Öffnung im stromabwärtigen unteren Teil (13) umfasst.

13. Anlage (1) nach einem der Ansprüche 5 bis 12, **dadurch gekennzeichnet, dass** die Wanne (9) einen Boden (23) umfasst, der mit Neigungs- oder Einziehmitteln versehen ist, die derart angeordnet sind, dass sie den Boden (23) freigeben und die Entnahme der in der Wanne (9) enthaltenen Mischung ermöglichen.

## Claims

1. A method for treating and recycling cuttings from earthworks, making it possible to obtain a comminution composed of a mixture of materials coming from said cuttings with at least one additive, and comprising at least the steps consisting in:
- regularly extracting from a hopper (3) a volume of materials, in such a way as to form a stream of materials, this stream being conveyed in one direction to an enclosure (6) disposed downstream of the hopper (3);
- introducing this stream of materials into the enclosure (6) gradually, under gravity;
- adding to the materials located in the enclosure (6) an additive, which is also introduced into the enclosure (6) gradually, under gravity;
- grinding the materials and mixing them with the additive, by means of a bladed rotor (7) having an axis of rotation perpendicular to the direction in which the stream of materials is conveyed from the hopper to the enclosure as well as to the direction of introduction, under gravity, of the stream of materials into the enclosure,
**characterized in that**
- the grinding and mixing are now done while permanently maintaining in the enclosure (6) a filling level of materials (12) in which said bladed rotor lies, the direction of rotation of the bladed rotor being configured to carry and cast against an inner wall of the enclosure the stream of materials falling into said enclosure, in a direction opposite to the conveying direction, the materials ground with the additive being then stirred several times, in particular because a constant filling level is maintained in the enclosure, said materials being cast against the inner wall of the enclosure once again, which refines the grinding and mixing,
- the mixture is gradually evacuated through an opening in the downstream lower part (13) of the enclosure (6), the rotation of the rotor allowing the evacuation of the mixture through said opening.

2. The method according to claim 1, **characterized in that** it comprises a prior step consisting in scalping the materials coming from the cuttings and in extracting the granular pieces of large size therefrom, said scalped materials being stored in the hopper (3).

3. The method according to one of claims 1 or 2, **characterized in that** it comprises an ensuing step consisting in sifting the mixture, to separate the small granular pieces remaining in said mixture from the fine comminution.

4. The method according to claim 3, **characterized in that** it comprises an ensuing step consisting in evacuating the small granular pieces and the fine comminution of the mixture separately.

5. An installation (1) for implementing the method in accordance with one of claims 1 to 4, comprising at least a first hopper (3) containing materials coming from earthwork cuttings, a second hopper (8) containing additive, a enclosure (6) within which a bladed rotor (7) is disposed, and a belt (5) for conveying said materials from the first hopper (3) to the enclosure (6), the bladed rotor having an axis of rotation perpendicular to the direction in which said materials are conveyed from the first hopper to the enclosure, as well as to the direction of introduction under gravity of said materials into the enclosure, and the enclosure (6) consisting in a vat (9) with an open upper part and provided with an opening in the downstream lower part (13), the downstream end (10) of said belt (5) and the second hopper (8) being disposed above the vat (9),
**characterized in that**
it comprises a system for managing the two hoppers (3, 8), the belt and the rotor (7), arranged to constantly maintain a filling level of materials (12) inside the vat (9) during the grinding and mixing, the direction of rotation of the bladed rotor being configured, firstly to carry and cast against an inner wall of the enclosure said materials falling into said enclosure, in a direction opposite to the conveying direction, and to stir said ground materials together with the additive several times, in particular because a constant filling level is maintained in the enclosure, said materials being cast against the inner wall of the enclosure once again, which refines the grinding and mixing, and, secondly, to gradually evacuate the mixture through the opening.

6. An installation (1) according to claim 5, **characterized in that** the management system comprises, firstly, means for measuring the torque exerted on the rotor (7), said torque being representative of the quantity of materials in the vat (9), and secondly, means for regulating the belt (5) speed, the rotation speed of the rotor (7), the flow rate of materials coming from excavation materials, and the flow rate of additive extracted from the corresponding hoppers (3, 8), said regulation being a function of the torque measurement.

7. The installation (1) according to one of claims 5 or 6, **characterized in that** it comprises a scalping screen (4) disposed above the first hopper (3) to scalp the materials coming from the cuttings before their introduction into said hopper (3), and to extract the granular pieces of large size.

8. The installation (1) according to one of claims 5 to 7, **characterized in that** it comprises an intermediate belt (14) of which at least the upstream end (15) is disposed under the opening in the downstream lower part (13) of the vat (9), said belt (14) being arranged to convey the mixture to at least one exit in the installation (1).

9. The installation (1) according to claim 8, **characterized in that** a sifter (16) is arranged at least under the downstream end (17) of the intermediate belt (14), this sifter (16) making it possible to extract the small granular pieces from the fine comminution of the mixture.

10. The installation (1) according to claim 9, **characterized in that** it comprises a first belt (20) for ejecting small granular pieces and a second belt (21) for ejecting the fine comminution, the sifter (16) being disposed above the second ejecting belt (21), one (19) of the ends of said sifter (16) being disposed above the upstream end of the first ejecting belt (20).

11. The installation (1) according to claim 10, **characterized in that** at least the intermediate belt (14), the sifter (16) and the second ejecting belt (21) are tilted upward, substantially parallel with one another, the upstream end (19) of the sifter (16) being above the upstream end of the first ejecting belt (20), the latter being disposed laterally.

12. The installation (1) according to one of claims 5 to 11, **characterized in that** the vat (9) comprises a system for adjusting the size of the opening in the downstream lower part (13).

13. The installation (1) according to one of claims 5 to 12, **characterized in that** the vat (9) comprises a bottom (23) provided with tilting means or retracting means arranged to release said bottom (23) and allow the extraction of the mixture contained in said vat (9).
